# EUROPÄISCHE PATENTSCHRIFT

(11) **EP 3 093 083 B1**
(45) Veröffentlichungstag und Bekanntmachung des Hinweises auf die Patenterteilung: **25.11.2020**
(21) Anmeldenummer: 15167543.6
(22) Anmeldetag: 13.05.2015
(51) Int. Cl.: B22D 11/05, B22D 11/16, H02K 26/00, B22D 11/053

(54) **EINRICHTUNG FÜR EINE OSZILLIERENDE BEWEGUNG EINER STRANGGIESSKOKILLE**
DEVICE FOR AN OSCILLATING MOVEMENT OF A CONTINUOUS CASTING MOULD
DISPOSITIF DESTINÉ AU MOUVEMENT OSCILLANT D'UNE COQUILLE POUR LA COULÉE EN CONTINU

(43) Veröffentlichungstag der Anmeldung: 16.11.2016
(73) Patentinhaber: SMS Concast AG, 8027 Zürich (CH)
(72) Erfinder: Kawa, Franz, 8143 Stallikon (CH); Dratva, Christian, 8052 Zürich (CH); Kabosch, Dino Tobias, 5400 Baden (CH)
(74) Vertreter: Luchs, Willi

(56) Entgegenhaltungen:
- CN-A- 101 920 320
- CN-A- 102 652 987
- CN-A- 103 600 043
- CN-B- 102 764 864
- DE-A1- 19 742 794
- DE-B1- 2 917 826

## Beschreibung

Bei einer Stranggiessanlage wird bekanntlich die Stranggiesskokille beim Giessen jeweils mit einer oszillierenden Bewegung versehen. Mit einer solchen Oszillation wird ein einwandfreies Giessen ermöglicht, insbesondere wird dabei ein Ankleben der sich bildenden Strangschale an der Innenwand der Kokille verhindert. Die Amplitude, die Frequenz sowie die Form der Schwingungen werden in Abhängigkeit der vorgegebenen Giessparameter, wie Giessgeschwindigkeit, Materialqualität und/oder Giesspulver-Zusammensetzung (oder Schmierung mit Öl etc), eingestellt. Um den Giessprozess zu optimieren, müssen diese Amplitude sowie die Frequenz den jeweiligen Betriebsbedingungen verzögerungsfrei und feinfühlig angepasst werden. Gleichzeitig werden an den Oszillationsantrieb hohe Anforderungen hinsichtlich seiner Zuverlässigkeit und Lebensdauer gestellt, da die Kokille während des Giessens permanent auf- und abbewegt wird.

Es ist bekannt, Oszillationsantriebe auf der Basis eines rotierenden Exzenters zu verwenden. Solche Antriebe können aber nur einen festen Hub erzeugen, so dass die Oszillationsamplitude nur durch Verstellen der Exzenterposition im Stillstand erfolgen kann. Zudem erfolgt der Drehantrieb des Exzenters meistens über einen Elektromotor, ein Untersetzungsgetriebe und eine Kupplung, und erfordert dadurch einen beträchtlichen konstruktiven sowie wartungs- und bedienungstechnischen Aufwand.

Eine Oszillationsantriebsvorrichtung für einen Kokillentisch gemäss der Druckschrift CN-102 764 864 ist mit einem Antrieb, einer Kupplung für eine Antriebswelle, einer Exzenterwelle und einer von dieser angetriebene Verbindungsstange versehen, die via ein Hebelgestänge mit einem Kokillentisch gekuppelt ist. Der Motor ist mit einem Steuersystem verbunden und ist als large-torque und als Direkt-Servoantrieb ausgelegt. Die Antriebswelle dreht reziprok mit gleichen Amplituden 2 x h von der Mitte aus in die eine bzw. andere Richtung mit einem Drehwinkel 2 x α und bewegt damit die Verbindungsstange auf und ab, so dass die Kokille entsprechend oszilliert wird. Damit ist aber nur eine begrenzte Steuerung dieser Vorrichtung hinsichtlich der Drehung des Exzenters und der bewirkten Auf- und Abbewegung der Verbindungsstange ermöglicht.

Eine mechanische Einrichtung der eingangs erwähnten Gattung ist auch in der Druckschrift DE-A-197 02 724 geoffenbart. Sie besteht aus zwei miteinander zusammenwirkenden Exzentern, die von einer gemeinsamen Getriebeanordnung mit gleicher Winkelgeschwindigkeit antreibbar sind, wobei die Einstellung der Oszillationsamplitude durch Veränderung der Überlagerungswinkel der beiden Exzenter bewirkt wird.

Mit einer solchen Einrichtung ist es zwar möglich, die Amplitude der Oszillationsbewegung stufenlos während des laufenden Betriebs zu verändern. Es können aber mit ihr nur sinusförmige Kokillenbewegungen erzeugt werden. Sie hat überdies den Nachteil einer sehr aufwändigen Konstruktion, sowohl hinsichtlich der beiden zusammenwirkenden Exzenter als auch des sie gemeinsam antreibenden Getriebes, da dieses beide Exzenter exakt mit der gleichen Rotationsgeschwindigkeit antreiben soll. Eine solche Konstruktion ist wartungsintensiv und verschleissanfällig wegen der vielen beweglichen Bauteile.

Ebenfalls bekannt sind Oszillationsantriebe auf der Basis einer elektrohydraulischen Servoeinrichtung. Dabei wird ein doppelwirkender Hydraulikzylinder gemäss einem von einem Funktionsgenerator erzeugten vorgewählten Signal gesteuert. Es kann sowohl Amplitude als auch Frequenz und die Schwingungsform während dem Betrieb variiert werden. Nachteilig sind hohe Anschaffungs-, Installations- und Instandhaltungskosten der Hydraulikversorgung (Tanks, Pumpen, Druckspeicher, Ventile, Verrohrung etc.) als auch die systemimmanente Brandgefahr bei Giessstörungen mit Flüssigstahlauslauf in die Einbaustelle solcher Antriebe. Ausserdem ist infolge der zweifachen Energieumwandlung der Wirkungsgrad dieser Antriebe relativ schlecht, was zu einer Erhöhung der laufenden Betriebskosten führt.

Bekannt sind auch Oszillationsantriebe auf der Basis eines elektromechanisch wirkenden Hubzylinders. Ein solches beinhaltet eine Gewindespindel mit einem Kugelumlauf- oder Planetenrollenantrieb, welche von einem Servomotor angetrieben wird. Dies ermöglicht, die Drehbewegung einem Servomotor angetrieben wird. Dies ermöglicht, die Drehbewegung der Gewindespindel in eine geradlinige Hubbewegung für die Kokillenoszillation umzuwandeln.

Schwachstelle eines derartigen Antriebs sind hohe Belastungen an den Kontaktstellen der umlaufenden Kugeln bzw. Rollen aufgrund der punkt- bzw. linienförmigen Berührung, durch welche eine begrenzte Lebensdauer resultiert. Ausserdem ergeben sich aufgrund der Bauweise relativ hohe Trägheitsmomente, was beim reversierenden Betrieb nachteilig ist. Zudem ist ein solcher Antrieb infolge von einer Vielzahl der Einzelteilen kostspielig und die Bauweise erfordert hohen Einbauraum, was die Einsatzmöglichkeiten einschränkt. Hinzu kommt, dass dieser Antrieb eine Verdrehsicherung und eine Haltebremse erfordert, da sie nicht selbsthemmend sind.

Der Erfindung liegt daher die Aufgabe zugrunde, die oben erwähnten Nachteile zu beheben und ein Verfahren mit einer Einrichtung der eingangs erwähnten Gattung zu schaffen, welche kompakt und bedienungsfreundlich ist, dabei vorzugsweise eine optimale Einstellbarkeit sowohl der Amplitude, der Frequenz als auch der Schwingungsform der Kokillenoszillation gewährleistet sein soll.

Diese Aufgabe wird erfindungsgemäss nach den Merkmalen des Anspruchs 1 gelöst.

Das erfindungsgemässe Verfahren zeichnet sich hauptsächlich dadurch aus, dass bei ihr der Exzenter nicht rotierend, sondern nur partiell reversierend bewegt wird, wobei die Hubhöhe und somit die Oszillationsamplitude durch den Winkelbereich der Verdrehung bestimmt werden kann, während der gewünschte oszillierende Hubverlauf aus dem zeitlichen Verlauf der Winkelverstellung resultiert.

Der Drehantriebsmotor, bei dem es sich insbesondere um einen Hochmomenten-Elektromotor (sogenannter Torque-Motor) handelt, ist bei entsprechender Auslegung in der Lage, den Exzenter ohne Zwischenschaltung eines Getriebes anzutreiben.

Um den Anforderungen des Giessbetriebes hinsichtlich einer optimalen Einstellung der Kokillenoszillation Rechnung zu tragen, sieht die Erfindung auch vor, dass der Schwenkwinkel, die Taktgeschwindigkeit sowie der Geschwindigkeitsverlauf des Drehantriebsmotors und somit entsprechend der Kokillenhub, die Frequenz und die Schwingungsform der Kokille unabhängig voneinander einstellbar sind.

Es ist für den automatischen Ablauf des Giessbetriebs zweckmässig, wenn der Drehantriebsmotor mit einer Regeleinheit, die beispielsweise von einem Computer aus bedienbar ist, verbunden ist. Zusätzlich ist der Drehantriebsmotor mit einer Steuereinheit verbunden, welche die Soll-Lage des Verstellwinkels abhängig zur Zeit vorgibt.

Das erfindungsgemässe Verfahren ermöglicht auch verschiedene Ausgestaltungen des Hubverlaufs im Zusammenhang mit der Winkelverstellung des Drehantriebsmotors. Die Erfindung sieht dafür vor, dass der Winkel-Arbeitsbereich des Exzenters innerhalb seiner Sinuskurve frei verlegbar ist, wobei im steilen Flankenbereich der Kurve das Verhältnis zwischen dem Winkelmass des Drehantriebsmotors und dem Hub des Exzenters quasi linear ist, während es im maximunnahen Bereich der Kurve nicht linear ist, aber dafür geringere Motorenmomente auftreten. Es ist im Sinne eines möglichst kompakten Aufbaus der Einrichtung zweckmässig, wenn der Exzenter direkt mit der Antriebswelle des Drehantriebsmotors antreibbar ist.

Die Erfindung wird nachfolgend anhand von Ausführungsbeispielen unter Bezugnahme auf die Zeichnung näher erläutert. Es zeigen:
- Fig. 1: ein mechanisches Schema einer Einrichtung zum Oszillieren einer Kokille einer Stranggiessanlage;
- Fig. 2: einen Längsschnitt eines Drehantriebsmotors sowie eines Exzenters der Einrichtung nach Fig. 1;
- Fig. 3: Diagramm des Vertikalhubs in Funktion des Verdrehwinkels bei unterschiedlichen Exzentrizitäten des Exzenters der Einrichtung gemäss Fig. 1;
- Fig. 4: eine schematische Frontansicht der Antriebswelle sowie des Exzenters der Einrichtung nach Fig. 2;
- Fig. 5: Diagramm eines möglichen Arbeitsbereiches des Exzenters der Einrichtung nach Fig. 1; und
- Fig. 6: Diagramm einer zweiten Variante eines Arbeitsbereiches des Exzenters der Einrichtung nach Fig. 1.

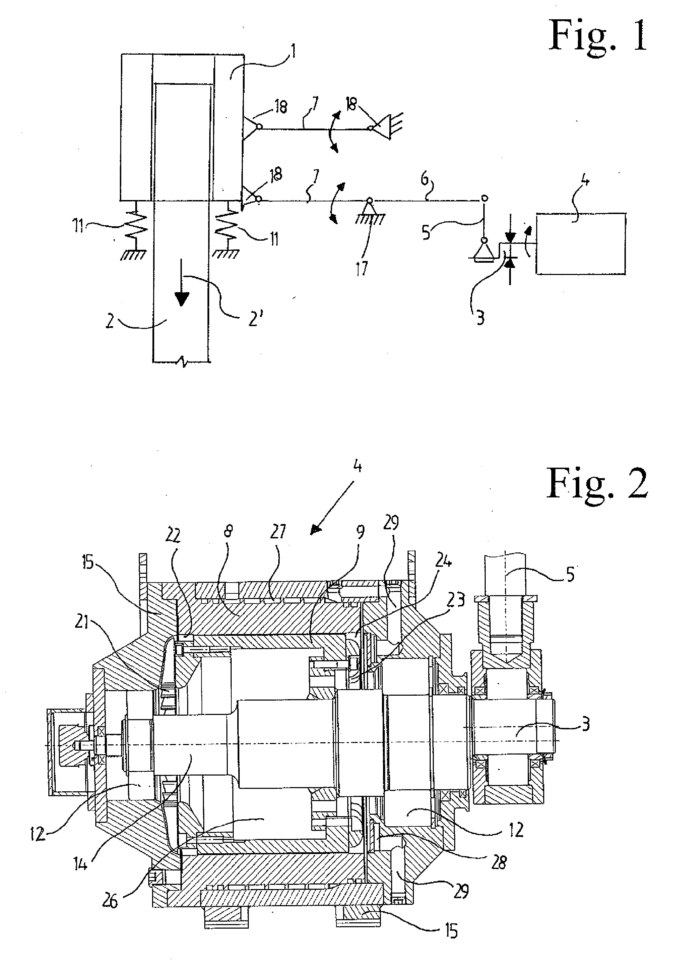

Die in Fig.1 schematisch dargestellte Einrichtung 10 dient zum üblichen Oszillieren einer Stranggiesskokille 1 zur Herstellung eines in Richtung des Pfeils 2' ausziehbaren Strangs 2. Eine solche Einrichtung 10 eignet sich für eine Stranggiessanlage zur Erzeugung von beliebigen Strangformaten, wie Knüppel, Vorblöcken, Beam-Blanks oder auch Brammenanlagen.

Die Stranggiesskokille 1 kann dabei in herkömmlicher Weise auf Federelementen 11 gelagert sein, mittels welchen eine Kraftunterstützung bei der Aufwärtsbewegung der Kokille ermöglicht wird. Die schematisch veranschaulichten Federelemente können selbstverständlich auch an andern Stellen eingebaut und je nach Positionierung als Zug-, Druck- und/oder Torsionsfedern ausgeführt sein.

Die Einrichtung 10 umfasst für die Auf- und Abbewegung der Kokille 1 an diese angelenkte Übertragungsmittel sowie einen mit einem Exzenter 3 verbundenen Antrieb. Die Übertragungsmittel setzen sich aus einem mit der Kokille 1 durch ein Gelenk 18 verbundenes Kipphebelelement 6, 7 und einer mit diesem gekoppelten Pleuelstange 5 zusammen, wobei dieses Kipphebelelement 6, 7 beispielsweise an einem Lager 17 kippbar gehalten ist. Im Betrieb wird die Pleuelstange 5 vom Exzenter 3 oszillierend angetrieben und überträgt die Oszillationsbewegung auf die Kokille oder einen sie tragenden Hubtisch.

Erfindungsgemäss ist als Antrieb ein Drehantriebsmotor 4 vorgesehen, welcher mit einer ständig wechselnden Drehrichtung zur Erzeugung dieser Auf- und Abbewegung der Kokille angetrieben ist.

Durch passende räumliche Anordnung der Übertragungsmittel insbesondere dieser Gelenke 18 und die richtige Längen der Kipphebel- bzw. Lenkelemente 6, 7 sind die gewünschte vertikale oder bogenförmige Hubbewegung der Kokille als auch die Kraftübersetzung optimal ausgelegt.

Der Drehantriebsmotor 4 ist, wie aus der Fig. 2 ersichtlich, als Hochmomenten-Rotationsmotor mit einem Stator 8 und einem Rotor 9 mit einer in einem Gehäuse 15 gelagerten Antriebswelle 14 ausgebildet. Dieser Antriebswelle 14 sind Lagerungen 12 zugeordnet, welche durch Wälzlager gebildet sind. Sie treibt den Exzenter 3 direkt an und ermöglicht dadurch eine sehr kompakte und robuste Anordnung zur Erzeugung der Oszillation, die wegen des Nichtvorhandenseins eines Getriebes preiswert und zudem platzsparend ist. Die Pleuelstange 5 ist ihrerseits so geführt, dass sie die Antriebskraft auf das Kipphebelelement 6, 7 in annähernd vertikaler Richtung überträgt. Ferner sind auf der Unterseite des Gehäuses 15 noch Füsse 15' angeordnet.

Sehr vorteilhaft ist in diesem Gehäuse 15 des Drehantriebsmotors 4 ein Kühlystem integriert, welches eine Umwälzung eines Kühlmediums zumindest zwischen dem Stator 8 und Rotor 9 bewirkt. Zu diesem Zwecke ist seitlich des Rotors 9 ein mit diesem verbundenes Kreiselpumpen-Laufrad 21 angeordnet, das bei einer Drehbewegung das Kühlmedium radial nach aussen und via einer Ringkammer 22 zwischen den Stator 8 und Rotor 9 befördert. Gegenüberliegend ist seitlich des Rotors 9 aussen eine ringförmige Kammer 24 und ein Umlenkrad 23 vorgesehen, durch welches das Kühlmedium zurück in den hohlzylindrisch ausgebildeten Rotor geleitet wird, in dem darin ein Kühlmittelbad 26 gebildet ist. Mit diesem Kühlmittelbad 26 sind gleichsam die Lagerungen 12 geschmiert bzw. gekühlt. Mit Vorteil wird als Kühlmedium ein geeignetes Öl verwendet.

Darüberhinaus ist dem Kühlsystem eine weitere Kühlung zugeordnet, die vorzugsweise mit umlaufendem Wasser am Aussenmantel des Stators 8 durch ringförmige Kühlkanäle 27 oder ähnlichem und eine Zu- und Ableitbohrung 29 sowie eine Kühlkammer 28 für das daneben durchfliessende Kühlmedium umfasst.

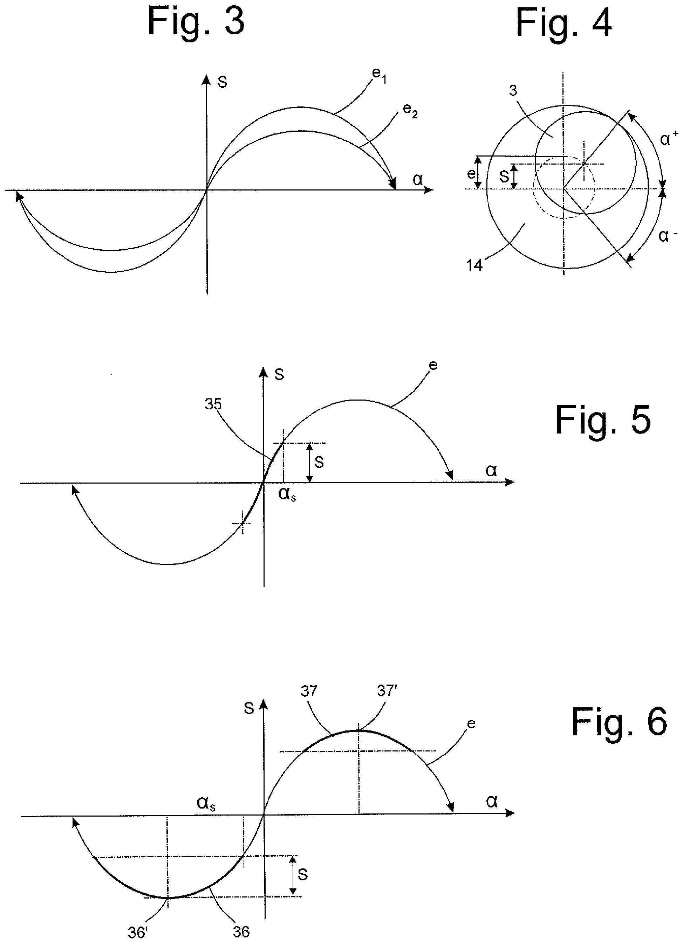

Gemäss Fig. 3 und Fig. 4 wird aufgrund dieser nicht rotierenden, sondern nur partiell reversierenden Bewegungssteuerung des Exzenters 3 durch die Antriebswelle 14 des Drehantriebsmotors 4 ein Hub S durch den zweimaligen Winkelbereich α der Verdrehung bestimmt, während der gewünschte Verlauf der Hubbewegung aus dem zeitlichen Verlauf der Winkelverstellung resultiert. Demnach ist der Hub S eine Funktion des Winkels α und der Exzentrizität e des Exzenters, wobei zwei unterschiedlich grosse Exzentrizitäten e1 und e2 veranschaulicht sind.

Es wird bei einem konstant rotierenden Exzenter 3 bekanntlich eine sinusförmige Bewegung in Vertikalrichtung mit einer von der Exzentrizität e abhängigen Amplitude erzeugt. Die Hubform der Oszillationsbewegung ihrerseits resultiert aus dem zeitlichen Verlauf der Winkelverstellung und ist z.B. bei einer konstanten Winkelgeschwindigkeit des Antriebsmotors sinusförmig.

Mit dem erfindungsgemässen Verfahren kann der Winkelarbeitsbereich des Exzenters im maximumnahen Bereich der Sinuskurve verwendet werden, was durch die Steuerung festgelegt wird.

Bei dem Verfahren wird der Exzenter reversierend hin und hergedreht, ausgehend von einer vorgewählten Nullstellung. Die Ausgangsposition ist grundsätzlich frei wählbar.

Wie im Diagramm gemäss Fig.5 ersichtlich ist, ergeben relativ kleine Winkel αₛ der Formkurve 35 bereits grosse Amplituden der Hubbewegung S, bei der aber die Kraftübersetzung niedrig ist, was höhere Antriebsmomente erfordert. Steuerungstechnisch vorteilhaft ist der annähernd lineare Zusammenhang zwischen dem Schwenkwinkel αₛ und der Hubhöhe S.

Bei der zweiten Variante gemäss Fig. 6, bei welcher der Exzenter um die Extremposition entlang der Formkurve 36, 37 insbesondere bis zur oder um die untere Totlage 36' bzw. die obere Totlage 37' geschwenkt wird, sind die erforderlichen Schwenkwinkel αₛ verhältnismässig grösser, um die gewünschte Hubhöhe S zu erreichen. Dafür entstehen bei jeder vollen Hin- und Her-Schwenkbewegung bereits zwei volle Hubzyklen und infolge der hohen Kraftübersetzung werden kleinere Antriebsmomente für gegebene Hubkräfte erforderlich. Ausserdem ergeben die untere und die obere Totlage 36', 37' den weiteren Vorteil, dass beim Start ein kleineres Losbrechmoment und somit eine geringere Motorleistung erforderlich ist.

Die Wahl des oberen oder unteren maximumnahen Bereichs hängt vorzugsweise von der Kraftrichtung in der Pleuelstange ab, welche von der Gewichtskraft der Kokille verursacht wird, wobei bei Zugkräften der obere Bereich und bei Druckkräften der untere Bereich gewählt wird, damit bei Drehrichtungsänderungen die Gewichtskraft unterstützend wirkt.

Die Hubform der Oszillationsbewegung ist, wie erwähnt eine Funktion der Winkelgeschwindigkeit des Antriebsmotors. Mit der erfindungsgemässen Einrichtung sind sowohl eine sinusförmige als auch nicht sinusförmige (z.B. sägezahnähnliche) Hubbewegungen mit konstanter oder variabler Amplitude bzw. Frequenz möglich. Dies wird in der Praxis dadurch realisiert, dass der Winkelarbeitsbereich des Exzenters als auch dessen Winkelgeschwindigkeit entsprechend den Giessprozessvorgaben geregelt wird.

Die zum Bewegen der Kokille erforderliche Hubkraft kann mittels der Stromaufnahme des elektrischen Drehantriebsmotors erfasst werden. Diese Messung ermöglicht die Ermittlung der Reibkraft zwischen Strang und Kokille, um den Giessprozess zu überwachen. Eine der möglichen Anwendung ist die Prävention von Strangschalendurchbrüchen durch Erkennung des Anstieges der Reibkraft und darauffolgender Reduktion der Giessgeschwindigkeit zur Strangschalenheilung.

Beim beschriebenen Ausführungsbeispiel ist der Drehantriebsmotor 4 als elektrischer Hochmomenten-Rotationsmotor ausgebildet. Es ist aber auch im Rahmen der Erfindung möglich, den Exzenter reversierend mit einem beliebigen Antriebsystem zu betreiben.

Die Verwendung eines Elektromotors als Drehantriebsmotor zum Antreiben des Exzenters ermöglicht es, durch Verändern des Winkelbereiches der Verdrehung bzw. der Winkelgeschwindigkeit des Elektromotors die Amplitude und /oder Frequenz sowie die Schwingungsform der Kokillenoszillation während des laufenden Giessbetriebes einzustellen, am besten automatisch durch einen mit dem Elektromotor steuerungstechnisch verbundenen Computer oder ähnlichem, der die für die Kokillenoszillation massgeblichen Steuerparameter gemäss den Giessparameter festlegt.

Die Erfindung ist mit dem erläuterten Ausführungsbeispiel ausreichend dargetan. Sie könnte aber noch durch andere Varianten verdeutlicht sein. So könnten beispielsweise die Übertragungsmittel der Oszillationsbewegung auf die Kokille durch ein Getriebe oder durch Gleitschienen realisiert sein.

So könnte beispielsweise der Exzenter doppelseitig gelagert und von einem fliegend gelagerten und über Drehmomentstütze gehaltenem Motor angetrieben sein. Ebenfalls könnten die Führungselemente der Kokille beispielsweise als Blattfeder realisiert sein.

Der erfindungsgemässe Torque-Motor mit der ständig wechselnden Drehrichtung für die Erzeugung des Kokillenhubs eignet sich auch bei einer Anwendung für eine sogenannte Tandemoszillation einer Kokille, bei der beidseitig zu der Kokille je eine unabhängige Antriebseinheit vorgesehen ist, was nicht näher gezeigt ist. Diese Antriebseinheiten sind in herkömmlicher Weise auf einem Gestell gelagert und weisen im Rahmen der Erfindung jeweils einen Drehantriebsmotor und einen von diesem angetriebenen Exzenter auf. Sie sind üblicherweise mit unterschiedlichen Hüben angesteuert, so dass die dazwischen befindliche Kokille eine von der Senkrechten abweichende Hubbewegung ausführt, insbesondere dann, wenn die Längsachse der Kokille leicht gebogen ist. Selbstverständlich könnte die Befestigung des Drehantriebsmotors auch direkt an der Kokille erfolgen.

## Patentansprüche

1. Verfahren für eine oszillierende Bewegung einer Stranggiesskokille, bei dem eine Einrichtung vorgesehen ist, die mit wenigstens einem motorisch angetriebenen Exzenter (3) und mit einem auf die Kokille (1) wirkenden Übertragungsmittel versehen ist, wobei der Exzenter (3) durch einen Drehantriebsmotor (4) mit einer ständig wechselnden Drehrichtung für die Erzeugung des Kokillenhubs angetrieben und dabei durch eine partiell reversierende Bewegungssteuerung entlang einer Formkurve (36, 37) bewegt wird, **dadurch gekennzeichnet, dass**
der Exzenter (3) um die Extremposition entlang der Formkurve (36, 37) um die untere bzw. um die obere Totlage (36', 37') geschwenkt wird.

2. Verfahren nach Anspruch 1, **dadurch gekennzeichnet, dass**
es sich bei dem Drehantriebsmotor (4) um einen Hochmomenten-Elektromotor (Torque-Motor) handelt, mittels welchem eine Kokillenoszillation ohne Zwischenschaltung eines Getriebes erfolgen kann.

3. Verfahren nach Anspruch 1 oder 2, **dadurch gekennzeichnet, dass**
die Winkellage der Antriebswelle (14) des insbesondere als Hochmomenten-Elektromotor vorgesehenen Drehantriebsmotors (4) in Abhängigkeit der Zeit als Stellglied für den Exzenter (3) vorgesehen ist.

4. Verfahren nach einem der vorhergehenden Ansprüche 1 bis 3, **dadurch gekennzeichnet, dass**
der Drehantriebsmotor (4) durch eine Regeleinheit geregelt und via einen Computer angesteuert wird, dies in Abhängigkeit der massgeblichen Giessparametern, insbesondere der Giessgeschwindigkeit.

5. Verfahren nach Anspruch 4, **dadurch gekennzeichnet, dass**
der Hub, die Frequenz der Schwenkbewegung, die Kurvenform als zeitlicher Verlauf des Hubes als Sinus, asymmetrischer Sinus oder als Sägezahn durch den Drehantriebsmotor (4) einstellbar sind.

6. Verfahren nach einem der vorhergehenden Ansprüche 1 bis 5, **dadurch gekennzeichnet, dass**
die Bewegung der Antriebswelle (14) des Drehantriebsmotors (4) derart einstellbar ist, dass der Hub (S) bzw. der Winkel-Arbeitsbereich (αₛ) des Exzenters (3) innerhalb seiner Formkurve (36, 37) um die untere bzw. um die obere Totlage (36', 37') verlegbar ist.

7. Verfahren nach einem der vorhergehenden Ansprüche 1 bis 6, **dadurch gekennzeichnet, dass**
als Übertragungsmittel ein mit der Kokille (1) gelenkig verbundenes Kippelement (6, 7) und eine mit diesem gekoppelten Pleuelstange (5) vorgesehen sind, wobei dieses Kippelement (6, 7) an einem Lager (17) kippbar gelagert ist.

8. Verfahren nach einem der vorhergehenden Ansprüche 1 bis 7, **dadurch gekennzeichnet, dass**
der Exzenter (3) direkt mit der Antriebswelle (14) des Drehantriebsmotors (4) verbunden bzw. von dieser angetrieben wird.

9. Verfahren nach einem der vorhergehenden Ansprüche 1 bis 8, **dadurch gekennzeichnet, dass**
die Bewegung der Kokille hinsichtlich ihrer Oszillationskinematik insbesondere zu der Frequenz, dem Hub und der Schwingform bestimmt und daraus ein entsprechendes Einstellen der Amplitude, der Winkelgeschwindigkeit und/oder der Frequenz beim Drehantriebsmotor (4) erfolgt

10. Verfahren nach einem der vorhergehenden Ansprüche 1 bis 9, **dadurch gekennzeichnet, dass**
die zum Bewegen der Kokille (1) erforderliche Hubkraft mittels der Stromaufnahme des elektrischen Drehantriebsmotors (4) erfasst wird, damit insbesondere eine Ermittlung der Reibkraft zwischen dem Giessstrang und der Kokille ermöglicht wird.

## Claims

1. Method for an oscillating movement of a continuous casting mold, with which a device is provided, which is having at least one motor-driven eccentric (3) and a transmission means acting on the mold (1), whereby the eccentric (3) is driven by a rotary drive motor (4) with a regularly alternating direction of rotation for the producing of the stroke and can be moved in a partially reversing movement control along a shaped curve (36, 37), **characterized in that**
the eccentric (3) is pivoted about the extreme position along the shaped curve (36, 37) around the lower or the upper dead position (36', 37').

2. Method according to claim 1, **characterized in that**
the rotary drive motor (4) is a high-torque electric motor (torque motor) by means of which a mold oscillation can take place without interposition of a gear.

3. Method according to claim 1 or 2, **characterized in that**
the angular position of the drive shaft (14) of the rotary drive motor (4) provided in particular as a high-torque electric motor is provided as an actuator for the eccentric (3) as a function of time.

4. Method according to one of the preceding claims 1 to 3, **characterized in that**
the rotary drive motor (4) is regulated by a control unit and controlled via a computer, this depending on the relevant casting parameters, in particular the casting speed.

5. Method according to claim 4, **characterized in that**
the stroke, the frequency of the pivoting movement, the curve shape as a time course of the stroke as a sinus, asymmetrical sinus or as a saw tooth can be adjusted by the rotary drive motor (4).

6. Method according to one of the preceding claims 1 to 5, **characterized in that**
the movement of the drive shaft (14) of the rotary drive motor (4) is adjustable in such a way that the stroke (S) or the angular working range (αₛ) of the eccentric (3) can be moved within its shape curve (36, 37) around the lower or the upper dead position (36', 37').

7. Method according to one of the preceding claims 1 to 6, **characterized in that**
a tilting element (6, 7) articulated connected to the mold (1) and a connecting rod (5) coupled to it are provided as the transmission means, whereby this tilting element (6, 7)) is tiltably mounted on a bearing (17).

8. Method according to one of the preceding claims 1 to 7, **characterized in that**
the eccentric (3) is connected directly to the drive shaft (14) of the rotary drive motor (4) or can be driven by this.

9. Method according to one of the preceding claims 1 to 8, **characterized in that**
the movement of the mold can be determined with regard to its oscillation kinematic in particular to the frequency, the stroke and the oscillation shape, and from this a corresponding setting of the amplitude, the angular speed and/or the frequency of the rotary drive motor (4) takes place.

10. Method according to one of the preceding claims 1 to 9, **characterized in that**
the lifting force required to move the mold (1) can be detected by means of the power consumption of the electric rotary drive motor (4), so that in particular the determination of the friction force between the cast strand and the mold is enabled.

## Revendications

1. Procédé pour donner un mouvement oscillant à une lingotière de coulée continue, dans lequel il est prévu un dispositif, qui est pourvu d'au moins un excentrique (3) motorisé et d'un moyen de transmission agissant sur la lingotière (1), l'excentrique (3) étant entraîné par un moteur (4) d'entraînement en rotation ayant un sens de rotation alternant en permanence pour la production de la course de la lingotière suivant une courbe (36, 37) de forme par une commande de mouvement s'inversant partiellement, **caractérisé en ce que** on fait pivoter, autour du point (36') mort bas et du point (37') mort haut, l'excentrique (3) autour de la position extrême, le long de la courbe (36, 37) de forme.

2. Procédé suivant la revendication 1, **caractérisé en ce que** le moteur (4) d'entraînement en rotation est un moteur électrique à grand couple (torque-motor), au moyen duquel une oscillation de la lingotière peut s'effectuer sans interposition d'une transmission.

3. Procédé suivant la revendication 1 ou 2, **caractérisé en ce que**
la position angulaire de l'arbre (14) d'entraînement du moteur (4) d'entraînement en rotation, prévu notamment comme moteur électrique à grand couple, en fonction du temps, est prévue comme organe de réglage de l'excentrique (3).

4. Procédé suivant l'une des revendications 1 à 3 précédentes, **caractérisé en ce que**
l'on régule le moteur (4) d'entraînement en rotation par une unité de régulation et on le commande par l'intermédiaire d'un ordinateur, cela en fonction de paramètres de coulée déterminants, notamment en fonction de la vitesse de coulée.

5. Procédé suivant la revendication 4, **caractérisé en ce que**
la course, la fréquence du mouvement de pivotement, la forme de la courbe comme tracé en fonction du temps de la course, sont réglables en sinus, en sinus dissymétrique ou en dent de scie par le moteur (4) d'entraînement en rotation.

6. Procédé suivant l'une des revendications 1 à 5 précédentes, **caractérisé en ce que**
le mouvement de l'arbre (14) d'entraînement du moteur (4) d'entraînement en rotation est réglable, de manière à ce que la course (S) ou la plage (αₛ) de travail angulaire de l'excentrique (3) puisse être placée au sein de sa courbe (36, 37) de forme, autour du point (36') mort bas ou du point (37') mort haut.

7. Procédé suivant l'une des revendications 1 à 6 précédentes, **caractérisé en ce qu'**
il est prévu, comme moyen de transmission, un élément (6, 7) de basculement articulé à la lingotière (1) et une bielle (5) motrice, qui y est couplée, cet élément (6, 7) de basculement étant monté basculant sur un palier (17).

8. Procédé suivant l'une des revendications 1 à 7 précédentes, **caractérisé en ce que**
l'on relie l'excentrique (3) directement à l'arbre (14) d'entraînement du moteur (4) d'entraînement en rotation ou on l'entraîne par celui-là.

9. Procédé suivant l'une des revendications 1 à 8 précédentes, **caractérisé en ce que**
le mouvement de la lingotière est déterminé en ce qui concerne sa cinématique d'oscillation, notamment par rapport à la fréquence, à la course et à la forme de l'oscillation et on en déduit un réglage correspondant de l'amplitude, de la vitesse angulaire et/ou de la fréquence pour le moteur (4) d'entraînement en rotation.

10. Procédé suivant l'une des revendications 1 à 9 précédentes, **caractérisé en ce que**
l'on détecte la force nécessaire pour mettre la lingotière (1) en mouvement, au moyen du courant absorbé par le moteur (4) électrique d'entraînement en rotation, afin de rendre possible notamment une détermination de la force de frottement entre le cordon de coulée et la lingotière.
